# EUROPEAN PATENT APPLICATION

(11) **EP 4 009 335 A1**
(43) Date of publication of application: **08.06.2022**
(21) Application number: 20857456.6
(22) Date of filing: 30.06.2020
(51) Int. Cl.: G21C 17/00, G21C 17/10

(54) **METHOD FOR MONITORING HOOK ACTION OF CONTROL ROD DRIVING MECHANISM OF NUCLEAR POWER STATION, AND ELECTRONIC DEVICE**

(30) Priority: 28.08.2019 CN 201910804971
(71) Applicant: China Nuclear Power Technology Research Institute Co., Ltd, Shenzhen Guangdong 518029 (CN); China General Nuclear Power Corporation, Futian District Shenzhen Guangdong 518029 (CN); CGN Power Co., Ltd, Shenzhen Guangdong 518029 (CN)
(72) Inventor: MA, Junchao, Shenzhen, Guangdong 518029 (CN); LI, Dongdong, Shenzhen, Guangdong 518029 (CN); ZHOU, Qi, Shenzhen, Guangdong 518029 (CN); LI, Tao, Shenzhen, Guangdong 518029 (CN)
(74) Representative: Mewburn Ellis LLP
(86) International application number: PCT/CN2020/099058
(87) International publication number: WO 2021/036484

(57) **Abstract**

A method for monitoring a hook action of a control rod driving mechanism of a nuclear power station, comprising: acquiring current signals of LC, MG and SG coils and noise generated by a hook action during rod lifting and rod inserting to generate a monitoring waveform; identifying characteristic points ma1 and mb1 at the beginning of closing of the MG coil and the LC coil in the monitoring waveform, and identifying rod lifting or rod inserting according to the sequence of the characteristic points ma1 and mb1; searching for characteristic points at the beginning of each coil action and a characteristic point corresponding to the end of the hook action in the monitoring waveform by taking the characteristic points ma1 and mb1 as starting points according to the time sequence of the characteristic points corresponding to the rod lifting or rod inserting; and calculating the hook action time according to the characteristic points, determining whether the hook action time is valid, and generating a monitoring signal. Detection is convenient, measurement is accurate, and monitoring accuracy is high. Also disclosed in the present application are a corresponding electronic device and a readable storage medium.

## Description

### FIELD OF THE INVENTION

The invention relates to a nuclear power field, in particular to a method for monitoring a gripper action of a control rod drive mechanism in a nuclear power plant.

### BACKGROUND OF THE INVENTION

During start-up, power conversion and shutdown of the nuclear power plant, the reactivity of the reactor is controlled by controlling the movements of the control rods such as lifting, inserting and holding, so as to ensure that the reactor is always in a controlled state. The control rods are usually grouped as a temperature rod cluster, a power rod cluster, a shutdown rod cluster, for example, according to different positions and functions of the control rods in the core. Four control rods in the same cluster are arranged symmetrically in the reactor core (control rods in the center of the reactor core are a separate cluster), and linked while running.

A control rod drive mechanism (electromagnetic coil, CRDM) is used to achieve the movements of the control rods such as lifting, inserting and holding, which is connected to the control rods through a drive rod assembly. Generally, the control rod drive mechanism adopts a stepwise magnetic lifting manner, and generally includes three electromagnetic coils, namely a lifting coil (LC), a movable gripper (MG) coil, and a stationary gripper (SG) coil. The electromagnetic coils and the yokes of the coil assembly and the iron core parts corresponding to the gripper assembly respectively constitute three electromagnets, namely a lifting electromagnet, a movable electromagnet and a stationary electromagnet, from top to bottom. Specifically, the LC is excited to cause the lifting armature to attract thereby driving the movable gripper to advance a step pitch; while the LC is demagnetized to separate the lifting armature thereby driving the movable gripper to reset. The MG coil is excited to cause the movable armature to attract thereby driving the connecting rod to move upward, so that the movable gripper swings into the annular groove of the driving rod and then engages with the annular teeth of the driving rod; while the MG coil is demagnetized to separate the movable armature to drive the connecting rod to descend, so that the movable gripper swings out of the annular groove of the driving rod and then disengages from the annular teeth of the driving rod. The SG coil is excited to cause the stationary armature to attract thereby driving the connecting rod to move upward, so that the stationary gripper swings into the annular groove of the driving rod and then engages with the annular teeth of the driving rod; while the SG coil is demagnetized to separate the stationary armature thereby driving the connecting rod to descend, so that the stationary gripper swings out of the annular groove of the driving rod and then disengages from the annular teeth of the driving rod.

The control system of control rods sends different currents to the three electromagnetic coils in the preset sequence to control the excitation and demagnetization of the coils, so that the core components of the three electromagnets in the corresponding gripper assembly run to control the actions of the driving rods thereby controlling the control rods to be lifted, inserted or stationary. As known, once the action time of gripper fails, the control rods may be out of control and there will be failures such as rod disengagement or rod dropping. Therefore, it is necessary to monitor the action time of the gripper during the whole process of lifting and inserting rods, that is, it's critical to calculate the start time and end time of the gripper action. Especially, it's required to accurately identify the start point of the coil current.

Chinese application CN200610152151.4 discloses an on-line monitoring and fault diagnosis method for the control rod drive mechanism of a pressurized water reactor nuclear power plant. In the method, extreme points are calculated and the waveform is process by broken lines, and the end points of the processed waveform are optimized, and then the characteristic points of the coil current are identified according to the changing trend of the waveform, current and fluctuation amplitude are checked, and then the process sequence and action time are determined according to the current and the fluctuation amplitude, thereby diagnosing the action time of the control rod. However, such a method has the following drawbacks: (1) the original waveform may be distorted since the waveform is processed firstly with broken lines and then with the identification, which may miss some fault waveforms resulting in inaccurate diagnosis; (2) interference is easily to be generated during the acquisition of the coil current in the control rod to lead a misidentification, and the action identification is carried out directly from the waveform change trend, which is prone to misjudgment due to the environmental interference in the control rod; (3) such a method cannot accurately determine the time of the gripper action, and the measurement error is large, since demagnetization of the coil does not indicate an end of the gripper action.

Therefore, there is an urgent need for a method for monitoring a gripper action of a control rod drive mechanism in a nuclear power plant to solve the above problems.

### SUMMARY OF THE INVENTION

Objectives of the invention are to provide a method for monitoring a gripper action of a control rod drive mechanism in a nuclear power plant, an electronic device, and a readable storage medium, with convenient detection, accurate measurement and high monitoring accuracy.

To achieve the above-mentioned objectives, the present invention provides a method for monitoring a gripper action of a control rod drive mechanism in a nuclear power plant, including steps: (1) while lifting and inserting a control rod, collecting current signals of a lifting coil (LC), a movable gripper (MG) coil and a stationary gripper (SG) coil, and a noise resulted from a gripper action, to generate a monitoring waveform of the gripper action; (2) identifying start points of the current signals of the MG coil and LC in the monitoring waveform to obtain a characteristic point ma1 where the MG coil starts to be closed and a characteristic point mb1 where the LC starts to be closed, and determining the monitoring waveform to be a rod-lifting waveform or a rod-inserting waveform according to a time sequence of the characteristic point ma1 and the characteristic point mb1; (3) according to the time sequence of the characteristic points corresponding to the rod-lifting waveform or the rod-inserting waveform, respectively taking the characteristic points ma1 and mb1 as start points to search for characteristic points indicating a start of each coil action and an end of a corresponding gripper action in the monitoring waveform, with the monitoring waveform being determined by a preset control time sequence of coil current corresponding to the rod-lifting waveform or the rod-inserting waveform; (4) calculating time of the corresponding gripper action according to the characteristic points, and determining whether said time conforms to a preset range, to generate a corresponding monitoring signal.

In comparison with the prior art, in the method of the present invention, the current of each CRDM coil and the noise generated by the gripper action are separately collected, specifically, the start points of the current signals of the MG coil and the LC are firstly collected to obtain a characteristic point ma1 where the MG coil starts to be closed and a characteristic point mb1 where the LC starts to be closed, based on the characteristic points ma1 and mb1, a rod-lifting motion or a rod-inserting motion can be identified, and other characteristic points can be detected. On one hand, the MG coil and the LC are usually closed at the beginning stage, thus the interference during detection is less and the detection result is stable. On the other hand, the end time of the gripper action can be accurately determined according to the noise signal, thus the measurement is accurate. In addition, the characteristic point ma1 and the characteristic point mb1 are taken as the start points to judge a start point of a next coil action according to the a preset control time sequence of coil current of the rod-lifting motion or the rod-inserting motion, that is, a start point of a next coil action is determined based on the start point of a previous coil action, therefore misidentification resulted from interference is prevented, and the monitoring accuracy is high.

Preferably, step (3) specifically includes: according to the time sequence of the characteristic points, taking the characteristic points ma1 and mb1 as start points to successively search for a characteristic point indicating a start of a next coil action in waveforms of the current signals of the LC, the MG coil and the SG coil, and taking the characteristic point indicating a start of each coil action as a start point to search for a characteristic point indicating an end of the gripper action in a noise waveform.

Preferably, step (2) specifically includes: identifying a start point in the monitoring waveform where the MG coil starts to be energized from zero current, as the characteristic point ma1; identifying a start point in the monitoring waveform where the LC start to be energized from zero current, as the characteristic point mb1; judging the time sequence of the characteristic point ma1 and the characteristic point mb1; determining the monitoring waveform as the rod-lifting waveform if the characteristic point ma1 is located in front of the characteristic point mb1; and determining the monitoring waveform as the rod-inserting waveform if the characteristic point ma1 is located behind the characteristic point mb1.

Preferably, the characteristic points further include a characteristic point md indicating a load transfer generated in an alternation process of alternately gripping the control rod between a SG and a MG; in step (3), end time of the gripper action of the SG or the MG in the alternation process is calculated by: determining a characteristic point mc2 indicating a start of an opening action of the SG coil in the alternation process, and taking the characteristic point mc2 as a start point to search for a next noise start point in the noise waveform as the characteristic point md, and taking the characteristic point md as a start point and taking a time value of a preset offset time as a center to search for a noise start point that meets a preset requirements within a preset range around the center as a characteristic point mc2+1 indicating an end of the opening action of the SG in the alternation process.

Preferably, during one process of lifting or inserting control rods, a method of determining the characteristic points indicating an end of the previous N gripper actions includes: taking the characteristic point indicating a start of the coil action as a start point to search for a next noise start point in the noise waveform, as a characteristic point indicating an end of the corresponding gripper action; a method of determining the characteristic points indicating an end of the (N+1)th gripper action includes: taking the characteristic point indicating a start of the coil action as a start point and taking a time value of a preset time of the gripper action as a center to search for a noise start point in the noise waveform within a preset range around the center, as a characteristic point indicating an end of the corresponding gripper action, wherein N is equal to 1 or 2.

Specifically, during a process of lifting the control rods in a first time, the characteristic points in the time sequence includes the characteristic point ma1 where a closing action of the MG is started, a characteristic point ma1+1 where the closing action of the MG is in place, the characteristic point mb1 where a closing action of the LC is started, a characteristic point mb1+1 where a lifting action of the MG is in place, a characteristic point mc1 where a closing action of the SG coil is started, a characteristic point mc1+1 where a closing action of the SG is in place, a characteristic point ma2 where an opening action of the MG coil is started, a characteristic point mb2 where an opening action of the LC is started, a characteristic point ma2+1 where an opening action of the MG is in placed, and a characteristic point mb2+1 where a lowering action of the MG is in place.

Specifically, during a process of lifting the control rods in a second time or above, the characteristic points in the time sequence includes the characteristic point ma1 where the closing action of the MG is started, a characteristic point ma1+1 where the closing action of the MG is in place, a characteristic point md indicating a load transfer, a characteristic point mb1 where the closing action of the LC is started, a characteristic point mc2+1 where the opening action of the SG is in place, a characteristic point mb1+1 where the lifting action of the MG is in place, a characteristic point mc1 where the closing action of the SG coil is started, a characteristic point ma2 where the opening action of the MG coil is started, a characteristic point mb2 where the opening action of the LC is started, a characteristic point ma2+1 where the opening action of the MG is in placed, and a characteristic point mb2+1 where the lowering action of the MG is in place;

Specifically, during a process of inserting the control rods, the characteristic points in the time sequence includes a characteristic point mb1 where the closing action of the LC is started, a characteristic point mb1+1 where the closing action of the MG is in place, a characteristic point ma1 where the closing action of the MG coil is started, a characteristic point ma1+1 where the closing action of the MG is in place, a characteristic point mc2 where the opening action of the SG coil is started, a characteristic point md indicating a load transfer, a characteristic point mc2+1 where the opening action of the SG is in place, a characteristic point mb2 where the opening action of the LC is started, a characteristic point mb2+1 where the lowering action of the MG is in place, a characteristic point mc1 where the closing action of the SG coil is started, a characteristic point mc1+1 where the closing action of the MG is in place, a characteristic point ma2 where the opening action of the MG coil is started, and a characteristic point ma2+1 where the opening action of the MG is in place.

Specifically, during the process of lifting the control rods in the first time in step (3), the method includes: taking the characteristic point ma1 as a start point to search for a next noise start point in the noise waveform as the characteristic point ma1+1; taking the characteristic point mb1 as a start point to search for a next noise start point in the noise waveform as the characteristic point mb1+1; taking the characteristic point mb1 as a start point to search for a start point in the waveform of the current signal of the SG coil where the SG coil starts to be energized from zero current, as the characteristic point mc1; taking the characteristic point mc1 as a start point and taking a time value of a preset time Tmc1 as a center to search for a noise start point in the noise waveform within a preset range around the center, as the characteristic point mc1+1; taking the characteristic point mc1 as a start point to search for a start point in the waveform of the current signal of the MG coil where the MG coil starts to be de-energized from full current, as the characteristic point ma2; taking the characteristic point ma2 as a start point and taking a time value of a preset time Tma2 as a center to search for a noise start point in the noise waveform within a preset range around the center, as the characteristic point ma2+1; and taking the characteristic point mb2 as a start point and taking a time value of a preset time Tmb2 as a center to search for a noise start point in the noise waveform within a preset range around the center, as the characteristic point mb2+1.

During the process of lifting the control rods in the second time or above in step (3), the method includes: taking the characteristic point ma1 as a start point to search for a next noise start point in the noise waveform as the characteristic point ma1+1; taking the characteristic point ma1+1 or ma1 as a start point to search for a start point in the waveform of the current signal of the SG coil where the SG coil starts to be de-energized from full current, as the characteristic point mc2; taking the characteristic point mc2 as a start point to search for a next noise start point in the noise waveform as the characteristic point md; taking the characteristic point md as a start point plus a preset offset time TD1 to search for a next noise start point in the noise waveform as the characteristic point mc2+1; taking the characteristic point mb1 as a start point and taking the value time of the preset time Tmb1 as a center to search for a next noise start point in the noise waveform within a preset range around the center, as the characteristic point mb1+1; taking the characteristic point mb1 as a start point to search for a start point in the waveform of current signal of SG coil where the current of the SG coil starts to be energized from zero current, as the characteristic point mc1; taking the characteristic point mc1 as a start point and taking a value time of a preset time Tmc1 as a center to search for a start point in search for a next noise start point in the noise waveform within a preset range around the center, as the characteristic point mc1+1; taking the characteristic point mc1 as a start point to search for a start point in the waveform of current signal of the MG coil where the MG coil starts to be de-energized from full current, as the characteristic point mb2; taking the characteristic point ma2 as a start point to search for a start point in the waveform of current signal of the LC where the LC starts to be de-energized from half current, as the characteristic point mb2; taking the characteristic point ma2 as a start point and taking a time value of a preset time Tma2 as a center to search for a noise start point in the noise waveform within a preset range around the center, as the characteristic point ma2+1; and taking the characteristic point mb2 as a start point and taking a time value of a preset time Tmb2 as a center to search for a noise start point in the noise waveform within a preset range around the center, as the characteristic point mb2+1.

During the process of inserting the control rods in step (3), the method includes: taking the characteristic point mb1 as a start point and taking a time value of a preset time Tmb1 as a center to search for a noise start point in the noise waveform within a preset range around the center, as the characteristic point mb1+1; taking the characteristic point ma1 as a start point to search for a next noise start point in the noise waveform as the characteristic point ma1+1; taking the characteristic point ma1 as a start point to search for a characteristic point in the current signal of the SG coil where the SG coil is de-energized from a full current, as the characteristic point mc2; taking the characteristic point mc2 as a start point and taking a time value of a preset time TD2 as a center to search for a noise start point in the noise waveform with a preset range around the center, as the characteristic point md; taking the characteristic point md as a start point and taking a time value of a preset time TD3 as a center to search for a next noise start point in the noise waveform, as the characteristic point mc2+1; taking the characteristic point mc2 as a start point to search for a characteristic point in the current signal of the LC where the LC starts to be de-energized from a half current, as the characteristic point mb2; taking the characteristic point mb2 as a start point and taking a time value of a preset time Tmb2 as a center to search for a noise start point in the noise waveform within a preset range around the center, as the characteristic point mb2+1; taking the characteristic point mb2 as a start point to search for a characteristic point in the current signal of the SG coil where the SG coil starts to be energized from zero current, as the characteristic point mc1; taking the characteristic point mc1 as a start point and taking a time value of a preset time Tmc1 as a center to search for a noise start point in the noise waveform within a preset range around the center, as the characteristic point mc1+1; taking the characteristic point mc1 as a start point to search for a characteristic point in the current signal of the MG coil where the MG coil starts to be de-energized from full current, as the characteristic point ma2; and taking the characteristic point ma2 as a start point and taking a time value of a preset time Tma2 as a center to search for a noise start point in the noise waveform within a preset range around the center, as the characteristic point ma2+1.

Preferably, in step (4), the method further includes calculating time when the SG is opened and time when the SG is closed, and determining whether said time is beyond a preset range, if yes, giving a fault alarm.

Preferably, the method further includes step (5), generating monitoring reports according to monitoring signals, and printing and exporting the monitoring reports.

The present invention further provides an electronic device including a data acquisition system, configured to collect coil currents of a LC, a MG coil and a SG coil; a microphone device, configured to collect noise generated by a gripper action; one or more processors; a memory; and one or more programs, stored in the memory and configured to be executed by one or more processors, the programs including instructions for executing the method for monitoring a gripper action of a control rod drive mechanism in a nuclear power plant as mentioned above.

The present invention further provides a computer-readable storage medium, including computer programs used in conjunction with an electronic device having a memory, wherein the computer programs are configured to be executed by a processor to perform the method for monitoring a gripper action of a control rod drive mechanism in a nuclear power plant as mentioned above.

### BRIEF DESCRIPTION OF THE DRAWINGS

FIG. 1 is a flowchart of a method for monitoring a gripper action of a control rod drive mechanism in a nuclear power plant according to the present invention.
FIG. 2 is a monitoring waveform when the control rod is lifted in the first time according to the present invention.
FIG. 3 is a monitoring waveform when the control rod is lifted in the second time and above according to the present invention.
FIG. 4 is a monitoring waveform when the control rods are inserted according to the present invention.

### DETAILED DESCRIPTION OF ILLUSTRATED EMBODIMENTS

In order to describe the technical content, structural features, achieved objects and effects of the present invention in detail, the following detailed description is given in conjunction with the embodiments and the accompanying drawings.

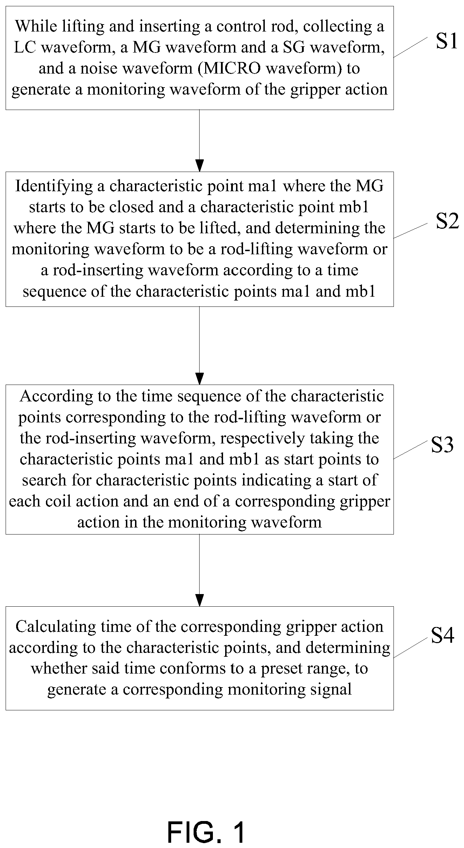

Referring to FIG. 1, a method for monitoring a gripper action of a control rod drive mechanism in a nuclear power plant of the present invention include the following steps: (S1) while lifting and inserting control rods, collecting a current signal of LC (lifting coil) to generate a LC waveform, collecting a current signal of MG (movable gripper) coil to generate a MG waveform and collecting a current signal of SG (stationary gripper) coil to generate a SG waveform, and collecting a noise resulted from a gripper action to generate a MICRO waveform (noise waveform), thereby generating a monitoring waveform of the gripper action including the LC waveform, the MG waveform and the SG waveform; (S2) identifying start points of the current signals of MG coil and LC in the monitoring waveform to obtain a characteristic point ma1 where the MG coil starts to be closed and a characteristic point mb1 where the LC starts to be close, and determining the monitoring waveform to be a rod-lifting waveform or a rod-inserting waveform according to a time sequence of the characteristic point ma1 and the characteristic point mb1; (S3) according to the time sequence of the characteristic points corresponding to the rod-lifting waveform or the rod-inserting waveform, respectively taking the characteristic points ma1 and mb1 as a start point to search for characteristic points indicating a start of each coil action and an end of a corresponding gripper action in the monitoring waveform; and (S4) calculating time of the corresponding gripper action according to the characteristic points, and determining that whether the time of the corresponding gripper action conforms to a preset range, to generate a corresponding monitoring signal. In the present invention, the characteristic point indicating a start of a gripper action is the start point indicating a start of a closing action of the coil.

Specifically, the time sequence of the characteristic points is a preset value, which is a time sequence of characteristic points indicating a start of a coil action and an end of a corresponding gripper action in the monitoring waveform that is determined by a preset control time sequence of coil current corresponding to the rod-lifting waveform or the rod-inserting waveform. Such a time sequence is determined by the technicians according to the preset coil current control sequence and a time sequence table of characteristic points obtained by the test. The preset control time sequence of coil current is corresponding to the rod-lifting waveform (rod lifting process) or the rod-inserting waveform (rod inserting process), which includes preset control time sequences of the LC, the SG coil and the MG coil.

Specifically, the gripper actions are corresponding to the coil actions. More specifically, the closing action of the LC is corresponding to the lifting action of the MG, the opening action of the LC is corresponding to the lowering action of the MG, the closing action of the SG coil is corresponding to the closing action of the SG, the opening action of the SG coil is corresponding to the opening action of the SG, the closing action of the MG coil is corresponding to the closing action of the MG, and the opening action of the MG coil is corresponding to the opening action of the MG.

Preferably, the method further includes, according to the preset control time sequence of coil current corresponding to the rod-lifting waveform or the rod-inserting waveform, taking the characteristic point ma1 and the characteristic point mb1 as start points to successively search for a characteristic point in waveforms of the current signals of the LC, the MG coil and the SG coil indicating a start of a next coil action, and taking the characteristic point indicating a start of each coil action as a start point to search for a characteristic point where indicates an end of the gripper action in a noise waveform. Of course, the next characteristic point may be searched directly from the previous one.

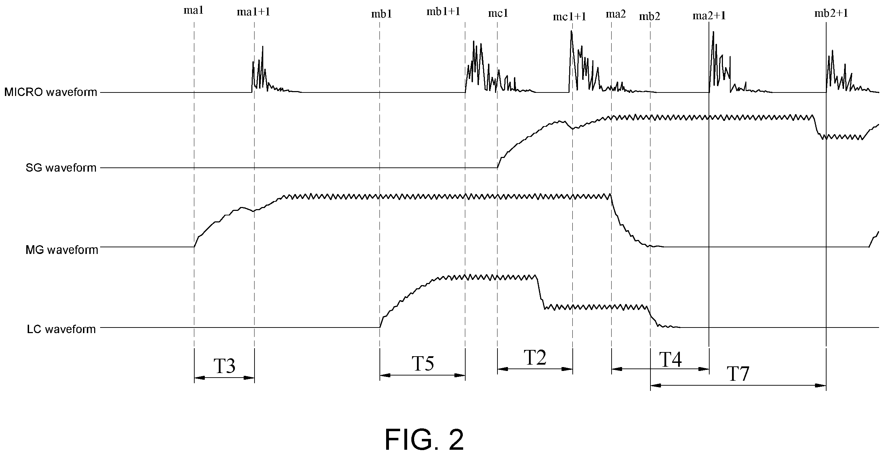

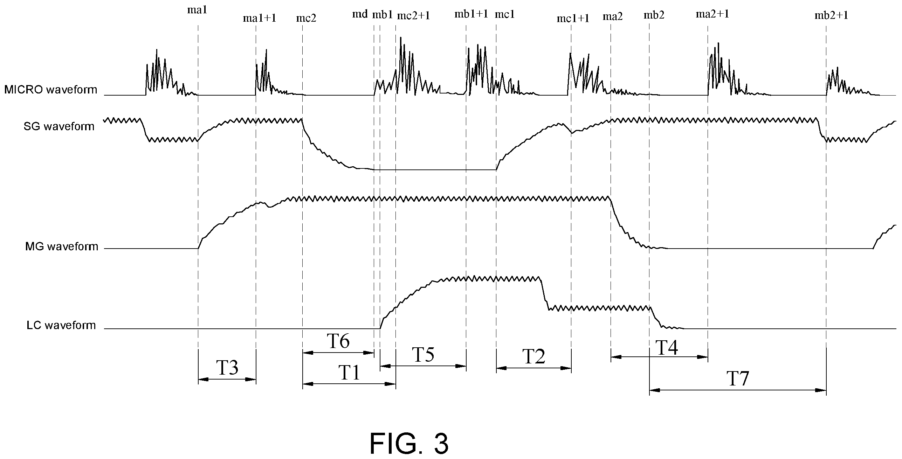

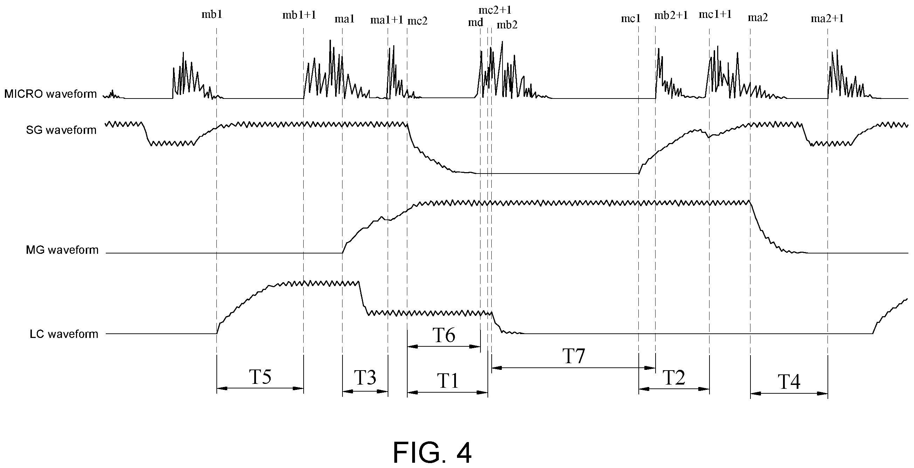

Preferably, step (S2) specifically includes identifying a start point in the monitoring waveform where the MG coil starts to be energized from zero current, as the characteristic point ma1; identifying a start point in the monitoring waveform where the LC start to be energized from zero current, as the characteristic point mb1; judging the time sequence of the characteristic point ma1 and the characteristic point mb1; determining the monitoring waveform as the rod-lifting waveform (as illustrated in FIGS. 2 and 3) if the characteristic point ma1 is located in front of the characteristic point mb1; and determining the monitoring waveform as the rod-inserting waveform (as illustrated in FIG. 4) if the characteristic point ma1 is located behind the characteristic point mb1. Specifically, a collected monitoring waveform is generally a waveform indicating a rod-lifting motion or a rod-inserting motion; once the collected monitoring waveform is not a complete waveform indicating the rod-lifting motion or the rod-inserting motion, the method further includes retaining the current waveform and capturing a front-end segment of the next collected waveform, thereby completing the incomplete waveform.

Referring to FIGS. 3 and 4, the characteristic points further include a characteristic point md indicating a load transfer generated in an alternation process of alternately gripping the control rods between a SG and a MG, in step (S3). In step (S3), the end time of the gripper action of the SG or the MG is calculated by the following steps: determining a characteristic point mc2 indicating a start of an opening action of the SG coil in the alternation process, and taking the characteristic point mc2 as the start point to search for a next noise start point in the noise waveform as the characteristic point md, and taking the characteristic point md as a start point and taking a time value of a preset offset time as a center to search for a noise start point that meets the preset requirements within a preset range around the center and is then served as a characteristic point mc2+1 indicating an end of the opening action of the SG in the alternation process.

In one process of lifting or inserting the control rods, the method of determining the characteristic points indicating the end of the previous N gripper actions includes: taking the characteristic point indicating a start of the coil action as a start point to search for a next noise start point in the noise waveform. The method of determining the characteristic points indicating and end of the (N+1)th gripper action includes: taking the characteristic point indicating a start of the coil action as a start point and taking a time value of a preset gripper action time as a center to search for a noise start point in the noise waveform within a preset range around the center, as a characteristic point indicating an end of the corresponding gripper action. Specifically, N is an integer equal to 1 or 2. Less noise interference is occurred in the previous gripper actions, thus only one gripper is in action, so that the next noise start point can be directly searched out in the waveform and then is treated as the characteristic point indicating the end of the corresponding gripper action. Optionally, all characteristic points indicating the end of all gripper actions may also be searched out according the above method of taking the characteristic point indicating a start of the coil action as a start point and taking a time value of a preset gripper action time as a center to search for a noise start point in the noise waveform within a preset range around the center, in which the noise start point is then served as a characteristic point indicating an end of the corresponding gripper action.

Referring to FIG. 2, in the process of lifting the control rods in the first time, the characteristic points in the time sequence include a characteristic point ma1 where a closing action of the MG is started, a characteristic point ma1+1 where the closing action of the MG is in place, a characteristic point mb1 where a closing action of the LC is started, a characteristic point mb1+1 where a lifting action of the MG is in place, a characteristic point mc1 where a closing action of the SG coil is started, a characteristic point mc1+1 where a closing action of the SG is in place, a characteristic point ma2 where an opening action of the MG coil is started, characteristic point mb2 where an opening action of the LC is started, a characteristic point ma2+1 where an opening action of the MG is in placed, and a characteristic point mb2+1 where a lowering action of the MG is in place.

Referring to FIG. 2 again, during the process of lifting the control rods in the first time in step (S3), the method includes: taking the characteristic point ma1 as a start point to search for a next noise start point in the noise waveform as the characteristic point ma1+1; taking the characteristic point mb1 as a start point to search for a next noise start point in the noise waveform as the characteristic point mb1+1; taking the characteristic point mb1 as a start point to search for a start point in the waveform of the current signal of the SG coil where the SG coil starts to be energized from zero current, as the characteristic point mc1; taking the characteristic point mc1 as a start point and taking a time value of a preset time Tmc1 as a center to search for a noise start point in the noise waveform within a preset range around the center, as the characteristic point mc1+1; taking the characteristic point mc1 as a start point to search for a start point in the waveform of the current signal of the MG coil where the MG coil starts to be de-energized from full current, as the characteristic point ma2; taking the characteristic point ma2 as a start point and taking a time value of a preset time Tma2 as a center to search for a noise start point in the noise waveform within a preset range around the center, as the characteristic point ma2+1; and taking the characteristic point mb2 as a start point and taking a time value of a preset time Tmb2 as a center to search for a noise start point in the noise waveform within a preset range around the center, as the characteristic point mb2+1. In this embodiment, the preset range includes fifty points. The value of the preset time may be obtained from experience and historical statistics, and can be updated according to historical statistical data according to a preset period.

Referring to FIG. 2 again, in step (S4), the method further includes respectively calculating the time T2 when the SG is closed, wherein T2=(mc1+1)-(mc1); calculating the time T3 when the MG is closed, wherein T3=(ma1+1)-(ma1); calculating the time T4 when the MG is opened, wherein T4=(ma2+1)-(ma2); calculating the time T5 when the MG is lifted (namely the lifting time of the powered-on LC), wherein T5= (mb1+1)-(mb1); calculating the time T7 when the MG is lowered, wherein T7= (mb2+1)-(mb2); and determining whether said time is beyond a preset range, if yes, giving an alarm.

Referring to FIG. 3, during the process of lifting the control rods in the second time or above, the characteristic points in the time sequence include a characteristic point ma1 where the closing action of the MG is started, a characteristic point ma1+1 where the closing action of the MG is in place, a characteristic point md indicating a load transfer, a characteristic point mb1 where the closing action of the LC is started, a characteristic point mc2+1 where the opening action of the SG is in place, a characteristic point mb1+1 where the lifting action of the MG is in place, a characteristic point mc1 where the closing action of the SG coil is started, a characteristic point ma2 where the opening action of the MG coil is started, a characteristic point mb2 where the opening action of the LC is started, a characteristic point ma2+1 where the opening action of the MG is in placed, and a characteristic point mb2+1 where the lowering action of the MG is in place.

Referring to FIG. 3 again, during the process of lifting the control rods in the second time or above in step (S3), the method includes: taking the characteristic point ma1 as a start point to search for a next noise start point in the noise waveform as the characteristic point ma1+1; taking the characteristic point ma1+1 or ma1 as a start point to search for a start point in the waveform of the current signal of the SG coil where the SG coil starts to be de-energized from full current, as the characteristic point mc2; taking the characteristic point mc2 as a start point to search for a next noise start point in the noise waveform as the characteristic point md; taking the characteristic point md as a start point plus a preset offset time TD1 to search for a next noise start point in the noise waveform as the characteristic point mc2+1; taking the characteristic point mb1 as a start point and taking the value time of the preset time Tmb1 as a center to search for a next noise start point in the noise waveform within a preset range around the center, as the characteristic point mb1+1; taking the characteristic point mb1 as a start point to search for a start point in the waveform of current signal of SG coil where the current of the SG coil starts to be energized from zero current, as the characteristic point mc1; taking the characteristic point mc1 as a start point and taking a value time of a preset time Tmc1 as a center to search for a start point in search for a next noise start point in the noise waveform within a preset range around the center, as the characteristic point mc1+1; taking the characteristic point mc1 as a start point to search for a start point in the waveform of current signal of the MG coil where the MG coil starts to be de-energized from full current, as the characteristic point mb2; taking the characteristic point ma2 as a start point to search for a start point in the waveform of current signal of the LC where the LC starts to be de-energized from half current, as the characteristic point mb2; taking the characteristic point ma2 as a start point and taking a time value of a preset time Tma2 as a center to search for a noise start point in the noise waveform within a preset range around the center, as the characteristic point ma2+1; and taking the characteristic point mb2 as a start point and taking a time value of a preset time Tmb2 as a center to search for a noise start point in the noise waveform within a preset range around the center, as the characteristic point mb2+1.

Referring to FIG. 3 again, in step (S4), the method further includes respectively calculating the time T1 when the SG is opened, wherein T1=(mc2+1)-(mc2); calculating the time T2 when the SG is closed, wherein T2=(mc1+1)-(mc1); calculating the time T3 when the MG is closed, wherein T3=(ma1+1)-(ma1); calculating the time T4 when the MG is opened, wherein T4=(ma2+1)-(ma2); calculating the time T5 when the MG is lifted (namely the lifting time of the powered-on LC), wherein T5= (mb1+1)-(mb1); calculating the time T6 where the load is transferred, wherein T6=(md)-(mc2); calculating the time T7 when the MG is lowered, wherein T7= (mb2+1)-(mb2); and determining whether said time of the gripper action is beyond a preset range, if yes, giving an alarm.

Referring to FIG. 4, during the process of inserting the control rods, the characteristic points arranged in the time sequence include the characteristic point mb1 where the closing action of the LC is started, a characteristic point mb1+1 where the closing action of the MG is in place, a characteristic point ma1 where the closing action of the MG coil is started, a characteristic point ma1+1 where the closing action of the MG is in place, a characteristic point mc2 where the opening action of the SG coil is started, a characteristic point md indicating a load transfer, a characteristic point mc2+1 where the opening action of the SG is in place, a characteristic point mb2 where the opening action of the LC is started, a characteristic point mb2+1 where the lowering action of the MG is in place, a characteristic point mc1 where the closing action of the SG coil is started, a characteristic point mc1+1 where the closing action of the MG is in place, a characteristic point ma2 where the opening action of the MG coil is started, and a characteristic point ma2+1 where the opening action of the MG is in place.

Referring to FIG. 4 again, during the process of inserting the control rods in step (S3), the method includes: taking the characteristic point mb1 as a start point and taking a time value of a preset time Tmb1 as a center to search for a noise start point in the noise waveform within a preset range around the center, as a characteristic point mb1+1; taking the characteristic point ma1 as a start point to search for a next noise start point in the noise waveform as a characteristic point ma1+1; taking the characteristic point ma1 as a start point to search for a characteristic point in the current signal of the SG coil where the SG coil is de-energized from a full current, as the characteristic point mc2; taking the characteristic point mc2 as a start point and taking a time value of a preset time TD2 as a center to search for a noise start point in the noise waveform with a preset range around the center, as the characteristic point md; taking the characteristic point md as a start point and taking a time value of a preset time TD3 as a center to search for a next noise start point in the noise waveform, as the characteristic point mc2+1; taking the characteristic point mc2 as a start point to search for a characteristic point in the current signal of the LC where the LC starts to be de-energized from a half current, as the characteristic point mb2; taking the characteristic point mb2 as a start point and taking a time value of a preset time Tmb2 as a center to search for a noise start point in the noise waveform within a preset range around the center, as the characteristic point mb2+1; taking the characteristic point mb2 as a start point to search for a characteristic point in the current signal of the SG coil where the SG coil starts to be energized from zero current, as the characteristic point mc1; taking the characteristic point mc1 as a start point and taking a time value of a preset time Tmc1 as a center to search for a noise start point in the noise waveform within a preset range around the center, as the characteristic point mc1+1; taking the characteristic point mc1 as a start point to search for a characteristic point in the current signal of the MG coil where the MG coil starts to be de-energized from full current, as the characteristic point ma2; and taking the characteristic point ma2 as a start point and taking a time value of a preset time Tma2 as a center to search for a noise start point in the noise waveform within a preset range around the center, as the characteristic point ma2+1.

Referring to FIG. 4 again, in step (S4), the method further includes respectively calculating the time T1 when the SG is opened, wherein T1=(mc2+1)-(mc2); calculating the time T2 when the SG is closed, wherein T2=(mc1+1)-(mc1); calculating the time T3 when the MG is closed, wherein T3=(ma1+1)-(ma1); calculating the time T4 when the MG is opened, wherein T4=(ma2+1)-(ma2); calculating the time T5 when the MG is lifted (namely the lifting time of the powered-on LC), wherein T5= (mb1+1)-(mb1); calculating the time T6 where the load is transferred, wherein T6=(md)-(mc2); calculating the time T7 when the MG is lowered, wherein T7=(mb2+1)-(mb2); and determining whether said time of the corresponding gripper action is beyond a preset range, if yes, giving an alarm.

Preferably, in step (S4), the method further includes calculating the time T1 when the SG is opened and the time T2 when the SG is closed, and determining whether the time T1 or T2 is beyond a preset range, if yes, giving an alarm. In the present embodiment, a fault alarm will be given if the time T1 is larger than 150ms; an alarm will be given if the time T2 is larger than 150ms.

Preferably, the method further includes step (S5) generating monitoring reports according to monitoring signals, and printing and exporting the monitoring reports. Specifically, the exported monitoring reports are PDF files. The monitoring signals include time of each gripper action, time sequence of each gripper action.

Optionally, the specific characteristic points and the specific time sequence of the characteristic points may be set by technicians according to actual demands, which are not limited to the above embodiments.

The present invention also discloses an electronic device including a data acquisition system, a microphone device, one or more processors, a memory, and one or more programs. The data acquisition system is configured to collect current signals of the LC, the MG coil, and SG coil. The microphone device is configured to collect noise generated by the gripper actions. The one or more programs are stored in the memory and are configured to be executed by the one or more processors, the programs include instructions for executing the method for monitoring a gripper action of a control rod drive mechanism in a nuclear power plant as described above.

Specifically, the electronic device is a device for monitoring and diagnosing the waveforms of the gripper actions in the control rod drive mechanism (CRDM) of the mega-kilowatt pressurized water reactor nuclear power plant, which specifically includes a PXI chassis, a measurement chassis, a signal conversion chassis and related software installed in the monitoring cabinet to collect noise signals of the gripper actions and current signals of three coils. The software is configured to analyze and process the signals of all control rods in each group in real time, and implement the above-mentioned method for monitoring the gripper actions of the control rod driving mechanism of the nuclear power plant to identify the states of the control rods, including the first rod lifting state, normal rod lifting state, and rod inserting state. And then, the signals are analyzed according to the corresponding waveform identification algorithm and diagnosis principle, finally all results are printed in the form of a report or exported to a PDF file. Specifically, each CRDM is installed with a microphone.

Specifically, the range of the lifting steps and inserting steps of the control rods is 0-232. The time sequence of the waveform while the control rods are lifted in the first time from zero step is different from that while the control rods are lifted at ordinary lifting processes, thus the processing method are different. Specifically, the movement speed of the control rod is 6-72step/min, the time sequence of one time of rod movement is about 780ms, and the sampling rate of the signal acquisition card is 1KHz. If the control rods run at the maximum speed (833ms), the acquisition card can still collect a complete waveform of the rod movement.

The monitoring cabinet mainly includes a single-connection cabinet, which is mainly composed of a PXI chassis (including one PXIe-8135 controller module, one NI8260 data storage module and six PXI-6225 data acquisition modules), a signal conversion chassis, a power supply chassis, a sensor, a printer, a network card, microphones and other components. The network card is configured to perform data communication to export the monitoring report, and the printer is configured to print the monitoring report. The sensor is configured to collect the coil current signal, and the microphone is configured to collect the noise. The data acquisition module is connected to the sensor and the microphone to transmit the collected coil current signal and the collected noise signal to the signal conversion chassis, which is converted by the signal conversion chassis and then sent to the controller module for processing. The data storage module is configured to store data, and the power chassis is configured to supply power to each module of the monitoring cabinet. The data acquisition system includes sensors, microphones and data acquisition modules.

While the invention has been described in connection with what are presently considered to be the most practical and preferred embodiments, it is to be understood that the invention is not to be limited to the disclosed embodiments, but on the contrary, is intended to cover various modifications and equivalent arrangements included within the spirit and scope of the invention.

## Claims

1. A method for monitoring a gripper action of a control rod drive mechanism in a nuclear power plant, comprising steps:
(1) while lifting and inserting a control rod, collecting current signals of a lifting coil (LC), a movable gripper (MG) coil and a stationary gripper (SG) coil, and a noise resulted from a gripper action, to generate a monitoring waveform of the gripper action;
(2) identifying start points of the current signals of the MG coil and LC in the monitoring waveform to obtain a characteristic point ma1 where the MG coil starts to be closed and a characteristic point mb1 where the LC starts to be closed, and determining the monitoring waveform to be a rod-lifting waveform or a rod-inserting waveform according to a time sequence of the characteristic point ma1 and the characteristic point mb1;
(3) according to the time sequence of the characteristic points corresponding to the rod-lifting waveform or the rod-inserting waveform, respectively taking the characteristic points ma1 and mb1 as start points to search for characteristic points indicating a start of each coil action and an end of a corresponding gripper action in the monitoring waveform, with the monitoring waveform being determined by a preset control time sequence of coil current corresponding to the rod-lifting waveform or the rod-inserting waveform; and
(4) calculating time of the corresponding gripper action according to the characteristic points, and determining whether said time conforms to a preset range, to generate a corresponding monitoring signal.

2. The method for monitoring a gripper action of a control rod drive mechanism in a nuclear power plant according to claim 1, wherein step (3) specifically comprises:
according to the time sequence of the characteristic points, taking the characteristic points ma1 and mb1 as start points to successively search for a characteristic point indicating a start of a next coil action in waveforms of the current signals of the LC, the MG coil and the SG coil, and taking the characteristic point indicating a start of each coil action as a start point to search for a characteristic point indicating an end of the corresponding gripper action in a noise waveform.

3. The method for monitoring a gripper action of a control rod drive mechanism in a nuclear power plant according to claim 1, wherein step (2) specifically comprises:
identifying a start point in the monitoring waveform where the MG coil starts to be energized from zero current, as the characteristic point ma1;
identifying a start point in the monitoring waveform where the LC start to be energized from zero current, as the characteristic point mb1;
judging the time sequence of the characteristic point ma1 and the characteristic point mb1;
determining the monitoring waveform as the rod-lifting waveform if the characteristic point ma1 is located in front of the characteristic point mb1; and
determining the monitoring waveform as the rod-inserting waveform if the characteristic point ma1 is located behind the characteristic point mb1.

4. The method for monitoring a gripper action of a control rod drive mechanism in a nuclear power plant according to claim 1, wherein the characteristic points further include a characteristic point md indicating a load transfer generated in an alternation process of alternately gripping the control rod between a SG and a MG; in step (3), end time of the gripper action of the SG or the MG in the alternation process is calculated by:
determining a characteristic point mc2 indicating a start of an opening action of the SG coil in the alternation process, and taking the characteristic point mc2 as a start point to search for a next noise start point in the noise waveform as the characteristic point md, and taking the characteristic point md as a start point and taking a time value of a preset offset time as a center to search for a noise start point that meets a preset requirements within a preset range around the center as a characteristic point mc2+1 indicating an end of the opening action of the SG in the alternation process.

5. The method for monitoring a gripper action of a control rod drive mechanism in a nuclear power plant according to claim 1, wherein during one process of lifting or inserting the control rod,
a method of determining the characteristic points indicating an end of the previous N gripper actions comprises: taking the characteristic point indicating a start of the coil action as a start point to search for a next noise start point in the noise waveform, as a characteristic point indicating an end of the corresponding gripper action;
a method of determining the characteristic points indicating an end of the (N+1)th gripper action comprises: taking the characteristic point indicating a start of the coil action as a start point and taking a time value of a preset time of the gripper action as a center to search for a noise start point in the noise waveform within a preset range around the center, as a characteristic point indicating an end of the corresponding gripper action, wherein N is equal to 1 or 2.

6. The method for monitoring a gripper action of a control rod drive mechanism in a nuclear power plant according to claim 1, wherein
during a process of lifting the control rod in a first time, the characteristic points in the time sequence comprises the characteristic point ma1 where a closing action of a MG is started, a characteristic point ma1+1 where the closing action of the MG is in place, the characteristic point mb1 where a closing action of the LC is started, a characteristic point mb1+1 where a lifting action of the MG is in place, a characteristic point mc1 where a closing action of the SG coil is started, a characteristic point mc1+1 where a closing action of the SG is in place, a characteristic point ma2 where an opening action of the MG coil is started, a characteristic point mb2 where an opening action of the LC is started, a characteristic point ma2+1 where an opening action of the MG is in placed, and a characteristic point mb2+1 where a lowering action of the MG is in place;
during a process of lifting the control rod in a second time or above, the characteristic points in the time sequence comprises the characteristic point ma1 where the closing action of the MG is started, a characteristic point ma1+1 where the closing action of the MG is in place, a characteristic point md indicating a load transfer, a characteristic point mb1 where the closing action of the LC is started, a characteristic point mc2+1 where the opening action of the SG is in place, a characteristic point mb1+1 where the lifting action of the MG is in place, a characteristic point mc1 where the closing action of the SG coil is started, a characteristic point ma2 where the opening action of the MG coil is started, a characteristic point mb2 where the opening action of the LC is started, a characteristic point ma2+1 where the opening action of the MG is in placed, and a characteristic point mb2+1 where the lowering action of the MG is in place;
during a process of inserting the control rod, the characteristic points in the time sequence comprises a characteristic point mb1 where the closing action of the LC is started, a characteristic point mb1+1 where the closing action of the MG is in place, a characteristic point ma1 where the closing action of the MG coil is started, a characteristic point ma1+1 where the closing action of the MG is in place, a characteristic point mc2 where the opening action of the SG coil is started, a characteristic point md indicating a load transfer, a characteristic point mc2+1 where the opening action of the SG is in place, a characteristic point mb2 where the opening action of the LC is started, a characteristic point mb2+1 where the lowering action of the MG is in place, a characteristic point mc1 where the closing action of the SG coil is started, a characteristic point mc1+1 where the closing action of the MG is in place, a characteristic point ma2 where the opening action of the MG coil is started, and a characteristic point ma2+1 where the opening action of the MG is in place.

7. The method for monitoring a gripper action of a control rod drive mechanism in a nuclear power plant according to claim 6, wherein
during the process of lifting the control rod in the first time in step (3), the method comprises:
taking the characteristic point ma1 as a start point to search for a next noise start point in the noise waveform as the characteristic point ma1+1;
taking the characteristic point mb1 as a start point to search for a next noise start point in the noise waveform as the characteristic point mb1+1;
taking the characteristic point mb1 as a start point to search for a start point in the waveform of the current signal of the SG coil where the SG coil starts to be energized from zero current, as the characteristic point mc1;
taking the characteristic point mc1 as a start point and taking a time value of a preset time Tmc1 as a center to search for a noise start point in the noise waveform within a preset range around the center, as the characteristic point mc1+1;
taking the characteristic point mc1 as a start point to search for a start point in the waveform of the current signal of the MG coil where the MG coil starts to be de-energized from full current, as the characteristic point ma2;
taking the characteristic point ma2 as a start point and taking a time value of a preset time Tma2 as a center to search for a noise start point in the noise waveform within a preset range around the center, as the characteristic point ma2+1; and
taking the characteristic point mb2 as a start point and taking a time value of a preset time Tmb2 as a center to search for a noise start point in the noise waveform within a preset range around the center, as the characteristic point mb2+1;
during the process of lifting the control rod in the second time or above in step (3), the method comprises:
taking the characteristic point ma1 as a start point to search for a next noise start point in the noise waveform as the characteristic point ma1+1;
taking the characteristic point ma1+1 or ma1 as a start point to search for a start point in the waveform of the current signal of the SG coil where the SG coil starts to be de-energized from full current, as the characteristic point mc2;
taking the characteristic point mc2 as a start point to search for a next noise start point in the noise waveform as the characteristic point md;
taking the characteristic point md as a start point plus a preset offset time TD1 to search for a next noise start point in the noise waveform as the characteristic point mc2+1;
taking the characteristic point mb1 as a start point and taking the value time of the preset time Tmb1 as a center to search for a next noise start point in the noise waveform within a preset range around the center, as the characteristic point mb1+1;
taking the characteristic point mb1 as a start point to search for a start point in the waveform of current signal of SG coil where the current of the SG coil starts to be energized from zero current, as the characteristic point mc1;
taking the characteristic point mc1 as a start point and taking a value time of a preset time Tmc1 as a center to search for a start point in search for a next noise start point in the noise waveform within a preset range around the center, as the characteristic point mc1+1;
taking the characteristic point mc1 as a start point to search for a start point in the waveform of current signal of the MG coil where the MG coil starts to be de-energized from full current, as the characteristic point mb2;
taking the characteristic point ma2 as a start point to search for a start point in the waveform of current signal of the LC where the LC starts to be de-energized from half current, as the characteristic point mb2;
taking the characteristic point ma2 as a start point and taking a time value of a preset time Tma2 as a center to search for a noise start point in the noise waveform within a preset range around the center, as the characteristic point ma2+1; and
taking the characteristic point mb2 as a start point and taking a time value of a preset time Tmb2 as a center to search for a noise start point in the noise waveform within a preset range around the center, as the characteristic point mb2+1;
during the process of inserting the control rod in step (3), the method comprises:
taking the characteristic point mb1 as a start point and taking a time value of a preset time Tmb1 as a center to search for a noise start point in the noise waveform within a preset range around the center, as the characteristic point mb1+1;
taking the characteristic point ma1 as a start point to search for a next noise start point in the noise waveform as the characteristic point ma1+1;
taking the characteristic point ma1 as a start point to search for a characteristic point in the current signal of the SG coil where the SG coil is de-energized from a full current, as the characteristic point mc2;
taking the characteristic point mc2 as a start point and taking a time value of a preset time TD2 as a center to search for a noise start point in the noise waveform with a preset range around the center, as the characteristic point md;
taking the characteristic point md as a start point and taking a time value of a preset time TD3 as a center to search for a next noise start point in the noise waveform, as the characteristic point mc2+1;
taking the characteristic point mc2 as a start point to search for a characteristic point in the current signal of the LC where the LC starts to be de-energized from a half current, as the characteristic point mb2;
taking the characteristic point mb2 as a start point and taking a time value of a preset time Tmb2 as a center to search for a noise start point in the noise waveform within a preset range around the center, as the characteristic point mb2+1;
taking the characteristic point mb2 as a start point to search for a characteristic point in the current signal of the SG coil where the SG coil starts to be energized from zero current, as the characteristic point mc1;
taking the characteristic point mc1 as a start point and taking a time value of a preset time Tmc1 as a center to search for a noise start point in the noise waveform within a preset range around the center, as the characteristic point mc1+1;
taking the characteristic point mc1 as a start point to search for a characteristic point in the current signal of the MG coil where the MG coil starts to be de-energized from full current, as the characteristic point ma2; and
taking the characteristic point ma2 as a start point and taking a time value of a preset time Tma2 as a center to search for a noise start point in the noise waveform within a preset range around the center, as the characteristic point ma2+1.

8. The method for monitoring a gripper action of a control rod drive mechanism in a nuclear power plant according to claim 1, wherein in step (4), the method further comprises calculating time when the SG is opened and time when the SG is closed, and determining whether said time is beyond a preset range, if yes, giving a fault alarm.

9. The method for monitoring a gripper action of a control rod drive mechanism in a nuclear power plant according to claim 1, further comprising step (5), generating monitoring reports according to monitoring signals, and printing and exporting the monitoring reports.

10. An electronic device, comprising:
a data acquisition system, configured to collect coil currents of a LC, a MG coil and a SG coil;
a microphone device, configured to collect noise generated by a gripper action;
one or more processors;
a memory; and
one or more programs, stored in the memory and configured to be executed by one or more processors, the programs comprising instructions for executing the method for monitoring a gripper action of a control rod drive mechanism in a nuclear power plant according to any one of claims 1-9.

11. A computer-readable storage medium, comprising computer programs used in conjunction with an electronic device having a memory, wherein the computer programs are configured to be executed by a processor to perform the method for monitoring a gripper action of a control rod drive mechanism in a nuclear power plant according to any one of claims 1-9.
